# EUROPEAN PATENT APPLICATION

(11) **EP 3 798 860 A1**
(43) Date of publication of application: **31.03.2021**
(21) Application number: 20181385.4
(22) Date of filing: 22.06.2020
(51) Int. Cl.: G06F 16/22

(54) **GENERATION AND USE OF A DYNAMIC BLOOM FILTER**

(30) Priority: 30.09.2019 US 201916587352
(71) Applicant: Citrix Systems Inc., Fort Lauderdale, FL 33309 (US)
(72) Inventor: Akar, Esad E., Fort Lauderdale, FL Florida 33309 (US); Azaret, Javier A., Fort Lauderdale, FL Florida 33309 (US); Dantas, Bruno S., Fort Lauderdale, FL Florida 33309 (US)
(74) Representative: Hanna Moore + Curley

(57) **Abstract**

A method (700) includes generating a dynamic Bloom filter based on a target false positive rate, a total number of elements to be inserted within a data structure of the dynamic Bloom filter, and at least one hash function. The total number of elements correspond to the number of first elements encoded in a data structure of an existing Bloom filter and a number of second elements to be added to the existing Bloom filter. The first elements may be inserted into the data structure of the dynamic Bloom filter by translating indexes with a bit having a first value in the data structure of the existing Bloom filter to the data structure of the dynamic Bloom filter. The second elements may be inserted (712) into the data structure of the dynamic Bloom filter based on corresponding hash values.

## Description

### BACKGROUND

**A** Bloom filter is a space-efficient probabilistic data structure used to determine whether an element is a member of a set. This membership determination can yield false positive matches, but false negatives are not possible. That is, in response to a query for an element in a set, a Bloom filter returns either an indication that the element is possibly in the set or an indication that the element is definitely not in the set. A Bloom filter can be updated to reflect which elements have been added to the set, but not which elements have been removed.

A Bloom filter may be implemented with a data structure, such as an m-bit bit vector, for example. The value of each bit in the m-bit vector is set to an initial value - e.g., a value of "0"- which indicates that the set does not yet contain any elements (or that the Bloom filter has not yet been updated to reflect elements that are already members of the set).

**As** elements are added to the set, a hashing function is used to map or insert the elements into the Bloom filter. For example, when the Bloom filter is implemented as an m-bit vector a hashing function is used to map the elements to the m-bit vector. In particular, the elements are hashed using *k* hash functions to generate *k* vector indexes and the corresponding k bits in the m-bit vector at the indexes are set to a first, value different from the initial value - e.g. a value of "1".

**To** determine, probabilistically, whether an element is a member of the set, the element is hashed with the same k hash functions to generate the k vector indexes If any of the bits at those k indexes in the m-bit vector are set to the initial value (e.g. "0"), then it can be determined that the element is definitely not a member of the set. If all of the bits at those k indexes in the bit vector are set to the first value (e.g. "1"), then the element is either: (a) a member of the set; or (b) at least one of the hash values computed for this element collided with the hash value for some other element of the set; or (c) the element was removed from the set.

Thus, hash collisions may result in a Bloom filter providing an indication that that an element is in a set, when the element is, in fact, not in the set. That is, the Bloom filter can produce false positives. In general, the more elements added to a set, the larger the probability the Bloom filter will produce false positives.

### SUMMARY

In accordance with one illustrative embodiment provided to illustrate the broader concepts, systems, and techniques described herein, a method may include determining a total number of elements to insert within a data structure of a dynamic Bloom filter, the data structure having a plurality of bit positions with each bit position being identified by an associated index, the total number of elements corresponding to a number of first elements encoded in a data structure of an existing Bloom filter and a number of second elements to be added to the existing Bloom filter, and generating the data structure of the dynamic Bloom filter based on the total number of elements, a target false positive rate, and at least one hash function to use in hashing the second elements. The method may also include translating data structure indexes with a bit having a first value in the data structure of the existing Bloom filter to the data structure of the dynamic Bloom filter, and inserting the second elements into the data structure of the dynamic Bloom filter by hashing the second elements using the at least one hash function to generate hashed values for the second elements and setting one or more bits of the data structure of the dynamic Bloom filter to the first value based upon the hashed values.

In one aspect, the existing Bloom filter may be an existing dynamic Bloom filter, the existing dynamic Bloom filter and the generated dynamic Bloom filter being in a sequence of dynamic Bloom filters, wherein the existing dynamic Bloom filter immediately precedes the generated dynamic Bloom filter in the sequence.

In one aspect, the total number of elements may be a sum of the number of first elements and the number of second elements.

In one aspect, the existing Bloom filter may be an initial Bloom filter in a sequence of dynamic Bloom filters that includes the generated dynamic Bloom filter.

In one aspect, the target false positive rate may be substantially similar to a target false positive rate of the existing Bloom filter.

In one aspect, the translating may include a modulo operation.

In one aspect, the data structure of the dynamic Bloom filter may include a bit vector.

In one aspect, the dynamic Bloom filter may be an existing dynamic Bloom filter, and the method may also include, responsive to a request to query the existing dynamic Bloom filter for an element, hashing the element using the at least one hash function to generate at least one hash value for the element, and determining one or more bits corresponding to one or more indexes to set to the first value based on the at least one hash value for the element and a size of an initial Bloom filter, the initial Bloom filter being a Bloom filter that originated a sequence of dynamic Bloom filters which include the existing dynamic Bloom filter. The method may also include translating indexes with a bit having the first value using the size of every sequentially generated dynamic Bloom filter up to the existing dynamic Bloom filter and querying the existing dynamic Bloom filter for the element using the final indexes from the translations.

In one aspect, translating indexes with a bit having the first value using the size of every sequentially generated dynamic Bloom filter may include a modulo operation.

In one aspect, the method may also include, responsive to a determination that the element does not exist in the existing dynamic Bloom filter, determining one or more bits corresponding to one or more indexes to set to the first value based on the at least one hash value for the element and a size of a first dynamic Bloom filter in the sequence, the first dynamic Bloom filter succeeding the initial Bloom filter, and translating indexes with a bit having the first value using the size of every sequentially generated dynamic Bloom filter up to the existing dynamic Bloom filter. The existing dynamic Bloom filter may then be queried for the element using the final indexes from the translations.

According to another illustrative embodiment provided to illustrate the broader concepts described herein, a system includes a memory and one or more processors in communication with the memory. The processor may be configured to determine a total number of elements to insert within a data structure of a dynamic Bloom filter, the data structure having a plurality of bit positions with each bit position being identified by an associated index, the total number of elements corresponding to a number of first elements encoded in a data structure of an existing Bloom filter and a number of second elements to be added to the existing Bloom filter, and generate the data structure of the dynamic Bloom filter based on the total number of elements, a target false positive rate, and at least one hash function to use in hashing the second elements. The processor may also be configured to translate indexes with a bit having a first value in the data structure of the existing Bloom filter to the data structure of the dynamic Bloom filter, and insert the second elements into the data structure of the dynamic Bloom filter by hashing the second elements using the at least one hash function to generate hashed values for the second elements and setting one or more bits of the data structure of the dynamic Bloom filter to the first value based upon the hashed values.

In one aspect, the dynamic Bloom filter may be an existing dynamic Bloom filter, and the processor may also be configured to, responsive to a request to query the existing dynamic Bloom filter for an element, hash the element using the at least one hash function to generate at least one hash value for the element, and determine one or more bits corresponding to one or more indexes to set to the first value based on the at least one hash value for the element and a size of an initial Bloom filter, the initial Bloom filter being a Bloom filter that originated a sequence of dynamic Bloom filters which include the existing dynamic Bloom filter. The processor may further be configured to translate indexes with a bit having the first value using the size of every sequentially generated dynamic Bloom filter up to the existing dynamic Bloom filter and query the existing dynamic Bloom filter for the element using the final indexes from the translations.

In one aspect, to translate indexes with a bit having the first value using the size of every sequentially generated dynamic Bloom filter may include a modulo operation.

In one aspect, the processor may also be configured to, responsive to a determination that the element does not exist in the existing dynamic Bloom filter, determine one or more bits corresponding to one or more indexes to set to the first value based on the at least one hash value for the element and a size of a first dynamic Bloom filter in the sequence, the first dynamic Bloom filter succeeding the initial Bloom filter, translate indexes with a bit having the first value using the size of every sequentially generated dynamic Bloom filter up to the existing dynamic Bloom filter, and query the existing dynamic Bloom filter for the element using the final indexes from the translations.

According to another illustrative embodiment provided to illustrate the broader concepts described herein, a non-transitory machine-readable medium encodes instructions that when executed by one or more processors, cause a process to be carried out. The process may include determining a total number of elements to insert within a data structure of a dynamic Bloom filter, the data structure having a plurality of bit positions with each bit position being identified by an associated index, the total number of elements corresponding to a number of first elements encoded in a data structure of an existing Bloom filter and a number of second elements to be added to the existing Bloom filter, and generating the data structure of the dynamic Bloom filter based on the total number of elements, a target false positive rate, and at least one hash function to use in hashing the second elements. The process may also include translating indexes with a bit having a first value in the data structure of the existing Bloom filter to the data structure of the dynamic Bloom filter, and inserting the second elements into the data structure of the dynamic Bloom filter by hashing the second elements using the at least one hash function to generate hashed values for the second elements and setting one or more bits of the data structure of the dynamic Bloom filter to the first value based upon the hashed values.

In one aspect, the dynamic Bloom filter may be an existing dynamic Bloom filter, and the process may also include, responsive to a request to query the existing dynamic Bloom filter for an element, hashing the element using the at least one hash function to generate at least one hash value for the element, and determining one or more bits corresponding to one or more indexes to set to the first value based on the at least one hash value for the element and a size of an initial Bloom filter, the initial Bloom filter being a Bloom filter that originated a sequence of dynamic Bloom filters which include the existing dynamic Bloom filter. The process may also include translating indexes with a bit having the first value using the size of every sequentially generated dynamic Bloom filter up to the existing dynamic Bloom filter and querying the existing dynamic Bloom filter for the element using the final indexes from the translations.

In one aspect, the process may also include, responsive to a determination that the element does not exist in the existing dynamic Bloom filter, determining one or more bits corresponding to one or more indexes to set to the first value based on the at least one hash value for the element and a size of a first dynamic Bloom filter in the sequence, the first dynamic Bloom filter succeeding the initial Bloom filter, and translating indexes with a bit having the first value using the size of every sequentially generated dynamic Bloom filter up to the existing dynamic Bloom filter. The existing dynamic Bloom filter may then be queried for the element using the final indexes from the translations.

### BRIEF DESCRIPTION OF THE DRAWINGS

The foregoing and other objects, features and advantages will be apparent from the following more particular description of the embodiments, as illustrated in the accompanying drawings in which like reference characters refer to the same parts throughout the different views. The drawings are not necessarily to scale, emphasis instead being placed upon illustrating the principles of the embodiments.
Fig. 1 depicts an illustrative computer system architecture that may be used in accordance with one or more illustrative aspects of the concepts described herein.
Fig. 2 depicts an illustrative remote-access system architecture that may be used in accordance with one or more illustrative aspects of the concepts described herein.
Fig. 3 is a schematic block diagram of a cloud computing environment in which various aspects of the disclosure may be implemented.
Fig. 4 is a block diagram illustrating selective components of an example computing device in which various aspects of the disclosure may be implemented, in accordance with an embodiment of the present disclosure.
Fig. 5 is a diagram showing insertion of elements into a new dynamic Bloom filter, in accordance with an embodiment of the present disclosure.
Fig. 6 is a diagram showing an example query of an existing dynamic Bloom filter for an element, in accordance with an embodiment of the present disclosure.
Fig. 7 is a flow diagram illustrating an example process for inserting a batch of elements into a new dynamic Bloom filter, in accordance with an embodiment of the present disclosure.
Fig. 8 is a flow diagram illustrating an example process for querying an existing dynamic Bloom filter for an element, in accordance with an embodiment of the present disclosure.

### DETAILED DESCRIPTION

The size of a Bloom filter (i.e., how much memory to allocate for encoding elements) is determined from the size of the total set of elements (total number of elements to encode) and a false positive rate. Thus, to size a Bloom filter, an accurate estimate of the size of the total set of elements to be inserted into a Bloom filter is required. If the estimate of the size of the total set of elements is incorrect, the Bloom filter can produce a higher than expected false positive rate. Unfortunately, in many cases, the size of the total set of elements may not be known before a Bloom filter is constructed. Moreover, the elements may arrive in batches or sequences for insertion into the Bloom filter where the size of the batch and/or the overall number of batches is not known.

Concepts, devices and techniques are disclosed for generating and using a dynamic Bloom filter that does not require an accurate estimate of the size of the total set of elements prior to generation of the dynamic Bloom filter. As used herein the term "dynamic Bloom filter" refers to a Bloom filter having information translated therein from a pre-existing Bloom filter. As used herein the term "translation" refers to any function capable of moving an element directly (i.e., without altering the element) from a position in a first Bloom filter (e.g., a pre-existing Bloom filter) to a position in a second bloom filter (e.g., a dynamic Bloom filter). One example of a translation is a modulo operation. The described concepts, devices and techniques may also facilitate generating dynamic Bloom filters that support or otherwise allow batch insert (e.g., batch encoding) of elements. In an embodiment, a new batch of elements is not inserted into (i.e., added to) an existing or otherwise current Bloom filter. Rather, the current Bloom filter is dynamically enlarged to account for the new batch of elements to be encoded. The elements in the new batch are then inserted into the dynamic Bloom filter. In this way, the generated dynamic Bloom filter is able to maintain or otherwise keep consistent properties, such as a false positive rate, with a prior Bloom filter. Thus, it is possible to maintain or otherwise keep consistent properties among a sequence of dynamic Bloom filters even when additional elements are inserted.

In more detail, and according to one example methodology, a Bloom filter is generated upon arrival of a first or initial batch of elements. In accordance with certain of the embodiments disclosed herein, the generated Bloom filter for encoding the first batch of elements may be a conventional Bloom filter. Prior to the Bloom filter being updated to reflect the first batch of elements (i.e., prior to the first batch of elements being inserted in the Bloom filter), the Bloom filter is initialized. For example, the value of each bit in the Bloom Filter may be set to an initial value -e.g. a value of "0."

A number of hash functions to use in the element insertion process is determined from the size of the batch (i.e., the number of elements in the batch) and a target or desired false positive rate. The size of the Bloom filter can then be computed or otherwise determined knowing the size of the batch (i.e., the number of elements in the batch), the target false positive rate, and the number of hash functions.

The first batch of elements can then be inserted into the Bloom filter. For example, to insert an element from the first batch, the element can be hashed using the hash functions, and the hashes (i.e., the results of the hash functions) used to determine or otherwise compute the indexes of the bits in the bit vector of the Bloom filter to set to a first value, such as, for example, '1'. The indexes of the bit vector refer to bit positions in the bit vector. Other elements in the first batch may be inserted into the Bloom filter in the same or a similar manner.

In general, a hash function is any function that can be used to map data of arbitrary size to fixed-size values. In this regard, "hashing" is the mapping of data to a fixed-size value based on a hash function (the fixed-size is the size of the data structure). The values returned by (i.e., the output of) a hash function are referred to as "hashes".

**As** used herein, the term "false positive rate" refers, in addition to its ordinary meaning, to the conditional probability of a test result (e.g., element is in the set) given an event that was not present (e.g., element is not actually in the set). A target false positive rate for a Bloom filter can be understood as being an acceptable rate of false positives matches returned by the Bloom filter.

For consecutive batches of elements, a new dynamic Bloom filter is generated to replace the existing (e.g., current) Bloom filter that was previously generated for the preceding batch(es) of elements. This new dynamic Bloom filter is generated with the size of the batch (the total number of elements to be inserted) being the sum of the number of elements already inserted into the existing Bloom filter and the number of elements in a new batch (i.e., a succeeding batch of elements). Further, the new dynamic Bloom filter is generated with the same target false positive rate that was used with the existing Bloom filter. Once the new dynamic Bloom filter is generated, the indexes with a '1' bit in the existing Bloom filter are translated (e.g., moved) to the new dynamic Bloom filter. Translating the indexes with a '1' bit to the new dynamic Bloom filter in effect encodes the preceding batch(es) of elements (i.e., the elements that were previously encoded in the existing Bloom filter) into the new dynamic Bloom filter. In one embodiment, the translation of the indexes of the existing Bloom filter to the new dynamic Bloom filter is with a predetermined degree of uniformity (i.e., uniform distribution). The new batch of elements can then be inserted into the new dynamic Bloom filter. For example, to insert an element from the new batch into the new dynamic Bloom filter, the element can be hashed using the hash functions, and the hashes used to determine or otherwise compute the indexes of the data structure of the new dynamic Bloom filter to set to '1'. In an example implementation, the indexes in the data structure may be determined using the modulo operation *x* modulo *y* where *x* is the hash (the result of the hash function) and *y* is the size of the new dynamic Bloom filter.

In some embodiments, to query a dynamic Bloom filter for an element, the element is hashed using the hash functions, and the hashes used to determine one or more bits corresponding to one or more indexes to set to a first value (e.g., the original indexes whose corresponding bits are set to a first value, such as to '1') using or based on the initial Bloom filter's size. Here, the initial Bloom filter refers to the Bloom filter that originated a sequence of dynamic Bloom filters of which the dynamic Bloom filter that is being queried may be the last dynamic Bloom filter in the sequence. The indexes with a bit having the first value are then translated using the size of every subsequently generated dynamic Bloom filter in the sequence of dynamic Bloom filters up to the dynamic Bloom filter that is being queried. The final indexes are then used to query the dynamic Bloom filter for the element. If the element is determined to not exist in the dynamic Bloom filter, the hashes are used to determine one or more bits corresponding to one or more indexes to set to the first value using the size of the next dynamic Bloom filter in the sequence of dynamic Bloom filters. These indexes with a bit having the first value are then translated using the size of every subsequently generated dynamic Bloom filter in the sequence of dynamic Bloom filters up to the dynamic Bloom filter that is being queried, and the final indexes used to query the dynamic Bloom filter for the element. This sequence of operations (i.e., determining the one or more bits corresponding to one or more indexes and translating the indexes with a bit having the first value) may be repeated until membership of the element is discovered or the dynamic Bloom filters in the sequence of dynamic Bloom filters to use to determine the original indexes are exhausted.

The disclosed techniques provide numerous advantages over previous techniques for generating and using Bloom filters. For example, and according to an embodiment, the disclosed techniques facilitate generation of dynamic Bloom filters without requiring the final size of the set (the final number of batches and/or the final number of elements) to be known ahead of time and yet preserve the efficient and, in some cases, highly efficient space utilization of Bloom filters. Also, dynamic Bloom filters according to embodiments of the present disclosure provide consistency with regard to Bloom filter efficiencies and properties, such as false positive rates, from one Bloom filter to the next Bloom filter. It will also be appreciated that the various embodiments of the disclosed techniques are particularly beneficial in that translation operations, which are relatively more computationally efficient than hashing operations, are performed to move elements from an existing Bloom filter into a new dynamic Bloom filter. In contrast, with existing Bloom filters, hashing is performed to insert elements, even for elements that may have been previously inserted into a previous Bloom filter. In other words, with existing Bloom filter techniques, elements in a Bloom filter are hashed using hash functions to insert into a new Bloom filter. These and other advantages and alternative embodiments will be apparent in light of this disclosure.

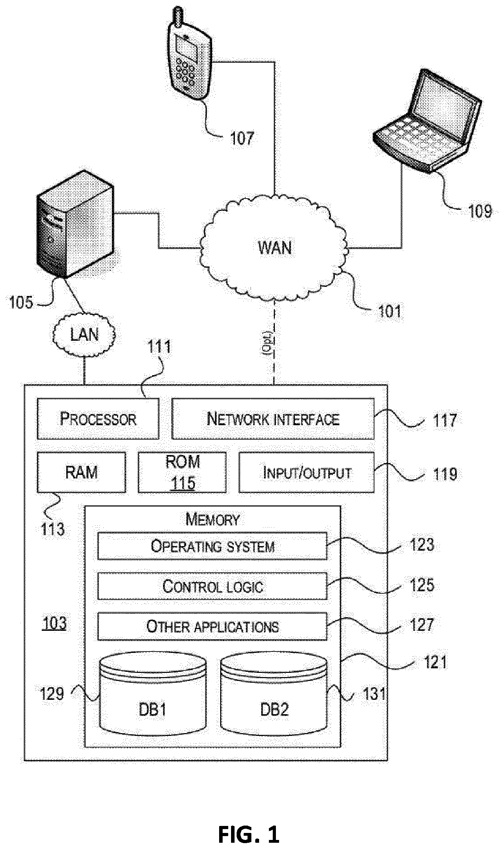

Computer software, hardware, and networks may be utilized in a variety of different system environments, including standalone, networked, remote-access (aka, remote desktop), virtualized, and/or cloud-based environments, among others. Fig. 1 illustrates one example of a system architecture and data processing device that may be used to implement one or more illustrative aspects of the concepts described herein in a standalone and/or networked environment. Various network node devices 103, 105, 107, and 109 may be interconnected via a wide area network (WAN) 101, such as the Internet. Other networks may also or alternatively be used, including private intranets, corporate networks, local area networks (LAN), metropolitan area networks (MAN), wireless networks, personal networks (PAN), and the like. Network 101 is for illustration purposes and may be replaced with fewer or additional computer networks. A local area network 133 may have one or more of any known LAN topologies and may use one or more of a variety of different protocols, such as Ethernet. Devices 103, 105, 107, and 109 and other devices (not shown) may be connected to one or more of the networks via twisted pair wires, coaxial cable, fiber optics, radio waves, or other communication media.

The term "network" as used herein and depicted in the drawings refers not only to systems in which remote storage devices are coupled together via one or more communication paths, but also to stand-alone devices that may be coupled, from time to time, to such systems that have storage capability. Consequently, the term "network" includes not only a "physical network" but also a "content network," which is comprised of the data-attributable to a single entity-which resides across all physical networks.

The components and devices which make up the system of Fig. 1 may include a data server 103, a web server 105, and client computers 107, 109. Data server 103 provides overall access, control and administration of databases and control software for performing one or more illustrative aspects of the concepts described herein. Data server 103 may be connected to web server 105 through which users interact with and obtain data as requested. Alternatively, data server 103 may act as a web server itself and be directly connected to the Internet. Data server 103 may be connected to web server 105 through local area network 133, wide area network 101 (e.g., the Internet), via direct or indirect connection, or via some other network. Users may interact with data server 103 using remote computers 107, 109, e.g., using a web browser to connect to data server 103 via one or more externally exposed web sites hosted by web server 105. Client computers 107, 109 may be used in concert with data server 103 to access data stored therein or may be used for other purposes. For example, from client device 107 a user may access web server 105 using an Internet browser, as is known in the art, or by executing a software application that communicates with web server 105 and/or data server 103 over a computer network (such as the Internet).

Servers and applications may be combined on the same physical machines, and retain separate virtual or logical addresses, or may reside on separate physical machines. Fig. 1 illustrates just one example of a network architecture that may be used in the system architecture and data processing device of Fig. 1, and those of skill in the art will appreciate that the specific network architecture and data processing devices used may vary, and are secondary to the functionality that they provide, as further described herein. For example, services provided by web server 105 and data server 103 may be combined on a single server.

Each component 103, 105, 107, 109 may be any type of known computer, server, or data processing device. Data server 103, e.g., may include a processor 111 controlling overall operation of data server 103. Data server 103 may further include a random access memory (RAM) 113, a read only memory (ROM) 115, a network interface 117, input/output interfaces 119 (e.g., keyboard, mouse, display, printer, etc.), and a memory 121. Input/output (I/O) interfaces 119 may include a variety of interface units and drives for reading, writing, displaying, and/or printing data or files. Memory 121 may store operating system software 123 for controlling overall operation of the data server 103, control logic 125 for instructing data server 103 to perform aspects of the concepts described herein, and other application software 127 providing secondary, support, and/or other functionality which may or might not be used in conjunction with aspects of the concepts described herein. Control logic 125 may also be referred to herein as the data server software. Functionality of the data server software may refer to operations or decisions made automatically based on rules coded into the control logic, made manually by a user providing input into the system, and/or a combination of automatic processing based on user input (e.g., queries, data updates, etc.).

Memory 121 may also store data used in performance of one or more aspects of the concepts described herein. Memory 121 may include, for example, a first database 129 and a second database 131. In some embodiments, the first database may include the second database (e.g., as a separate table, report, etc.). That is, the information can be stored in a single database, or separated into different logical, virtual, or physical databases, depending on system design. Devices 105, 107, and 109 may have similar or different architecture as described with respect to data server 103. Those of skill in the art will appreciate that the functionality of data server 103 (or device 105, 107, or 109) as described herein may be spread across multiple data processing devices, for example, to distribute processing load across multiple computers, to segregate transactions based on geographic location, user access level, quality of service (QoS), etc.

One or more aspects of the concepts described here may be embodied as computer-usable or readable data and/or as computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution or may be written in a scripting language such as (but not limited to) Hypertext Markup Language (HTML) or Extensible Markup Language (XML). The computer executable instructions may be stored on a computer readable storage medium such as a nonvolatile storage device. Any suitable computer readable storage media may be utilized, including hard disks, CD-ROMs, optical storage devices, magnetic storage devices, and/or any combination thereof. In addition, various transmission (non-storage) media representing data or events as described herein may be transferred between a source node and a destination node (e.g., the source node can be a storage or processing node having information stored therein which information can be transferred to another node referred to as a "destination node"). The media can be transferred in the form of electromagnetic waves traveling through signal-conducting media such as metal wires, optical fibers, and/or wireless transmission media (e.g., air and/or space). Various aspects of the concepts described herein may be embodied as a method, a data processing system, or a computer program product. Therefore, various functionalities may be embodied in whole or in part in software, firmware, and/or hardware or hardware equivalents such as integrated circuits, field programmable gate arrays (FPGA), and the like. Particular data structures (e.g. various forms of array data structures that can compactly store bits including, but not limited to bit vectors) may be used to more effectively implement one or more aspects of the concepts described herein, and such data structures are contemplated within the scope of computer executable instructions and computer-usable data described herein.

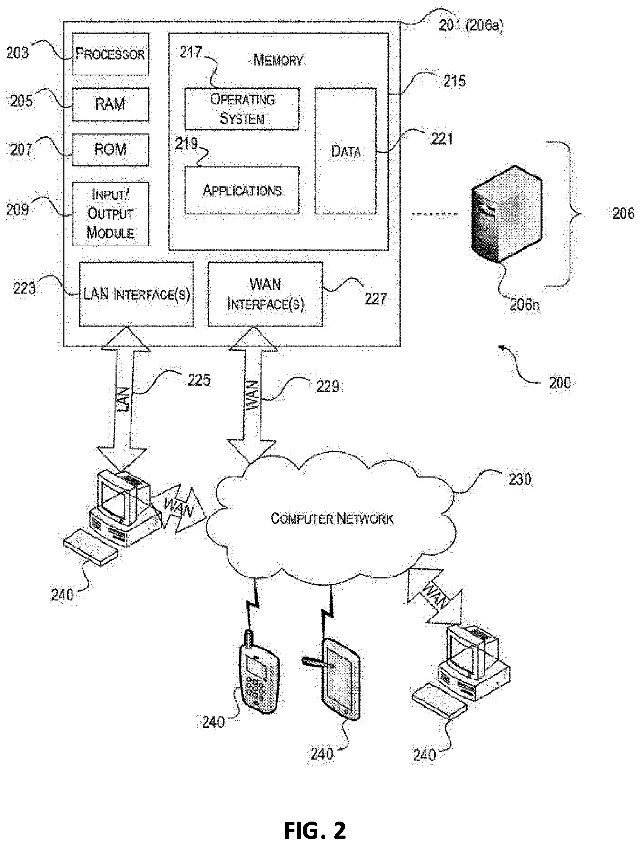

With further reference to Fig. 2, one or more aspects of the concepts described herein may be implemented in a remote-access environment. Fig. 2 depicts an example system architecture including a computing device 201 in an illustrative computing environment 200 that may be used according to one or more illustrative aspects of the concepts described herein. Computing device 201 may be used as a server 206a in a single-server or multi-server desktop virtualization system (e.g., a remote access or cloud system) configured to provide virtual machines (VMs) for client access devices. Computing device 201 may have a processor 203 for controlling overall operation of the server and its associated components, including a RAM 205, a ROM 207, an input/output (I/O) module 209, and a memory 215.

I/O module 209 may include a mouse, keypad, touch screen, scanner, optical reader, and/or stylus (or other input device(s)) through which a user of computing device 201 may provide input, and may also include one or more of a speaker for providing audio output and one or more of a video display device for providing textual, audiovisual, and/or graphical output. Software may be stored within memory 215 and/or other storage to provide instructions to processor 203 for configuring computing device 201 into a special purpose computing device in order to perform various functions as described herein. For example, memory 215 may store software used by the computing device 201, such as an operating system 217, application programs 219, and an associated database 221.

Computing device 201 may operate in a networked environment supporting connections to one or more remote computers, such as terminals 240 (also referred to as client devices). Terminals 240 may be personal computers, mobile devices, laptop computers, tablets, or servers that include many or all the elements described above with respect to data server 103 or computing device 201. The network connections depicted in Fig. 2 include a local area network (LAN) 225 and a wide area network (WAN) 229 but may also include other networks. When used in a LAN networking environment, computing device 201 may be connected to LAN 225 through an adapter or network interface 223. When used in a WAN networking environment, computing device 201 may include a modem or other wide area network interface 227 for establishing communications over WAN 229, such as to computer network 230 (e.g., the Internet). It will be appreciated that the network connections shown are illustrative and other means of establishing a communication link between the computers may be used. Computing device 201 and/or terminals 240 may also be mobile terminals (e.g., mobile phones, smartphones, personal digital assistants (PDAs), notebooks, etc.) including various other components, such as a battery, speaker, and antennas (not shown).

Aspects of the concepts described herein may also be operational with numerous other general purpose or special purpose computing system environments or configurations. Examples of other computing systems, environments, and/or configurations that may be suitable for use with aspects of the concepts described herein include, but are not limited to, personal computers, server computers, handheld or laptop devices, multiprocessor systems, microprocessor-based systems, set top boxes, programmable consumer electronics, network personal computers (PCs), minicomputers, mainframe computers, distributed computing environments that include any of the above systems or devices, and the like.

**As** shown in Fig. 2, one or more terminals 240 may be in communication with one or more servers 206a-206n (generally referred to herein as "server(s) 206"). In one embodiment, computing environment 200 may include a network appliance installed between server(s) 206 and terminals 240. The network appliance may manage client/server connections, and in some cases can load balance client connections amongst a plurality of back-end servers 206.

Terminals 240 may in some embodiments be referred to as a single computing device or a single group of client computing devices, while server(s) 206 may be referred to as a single server 206 or a group of servers 206. In one embodiment, a single terminal 240 communicates with more than one server 206, while in another embodiment a single server 206 communicates with more than one terminal 240. In yet another embodiment, a single terminal 240 communicates with a single server 206.

Terminal 240 can, in some embodiments, be referred to as any one of the following non-exhaustive terms: client machine(s); client(s); client computer(s); client device(s); client computing device(s); local machine; remote machine; client node(s); endpoint(s); or endpoint node(s). Server 206, in some embodiments, may be referred to as any one of the following non-exhaustive terms: server(s), local machine; remote machine; server farm(s), or host computing device(s).

In one embodiment, terminal 240 may be a VM. The VM may be any VM, while in some embodiments the VM may be any VM managed by a Type 1 or Type 2 hypervisor, for example, a hypervisor developed by Citrix Systems, IBM, VMware, or any other hypervisor. In some aspects, the VM may be managed by a hypervisor, while in other aspects the VM may be managed by a hypervisor executing on server 206 or a hypervisor executing on terminal 240.

Some embodiments include a terminal, such as terminal 240, that displays application output generated by an application remotely executing on a server, such as server 206, or other remotely located machine. In these embodiments, terminal 240 may execute a VM receiver program or application to display the output in an application window, a browser, or other output window. In one example, the application is a desktop, while in other examples the application is an application that generates or presents a desktop. A desktop may include a graphical shell providing a user interface for an instance of an operating system in which local and/or remote applications can be integrated. Applications, as used herein, are programs that execute after an instance of an operating system (and, optionally, also the desktop) has been loaded.

Server 206, in some embodiments, uses a remote presentation protocol or other program to send data to a thin-client or remote-display application executing on the client to present display output generated by an application executing on server 206. The thin-client or remote-display protocol can be any one of the following non-exhaustive list of protocols: the Independent Computing Architecture (ICA) protocol developed by Citrix Systems, Inc. of Fort Lauderdale, Florida; or the Remote Desktop Protocol (RDP) manufactured by Microsoft Corporation of Redmond, Washington.

A remote computing environment may include more than one server 206a-206n logically grouped together into a server farm 206, for example, in a cloud computing environment. Server farm 206 may include servers 206a-206n that are geographically dispersed while logically grouped together, or servers 206a-206n that are located proximate to each other while logically grouped together. Geographically dispersed servers 206a-206n within server farm 206 can, in some embodiments, communicate using a WAN, MAN, or LAN, where different geographic regions can be characterized as: different continents; different regions of a continent; different countries; different states; different cities; different campuses; different rooms; or any combination of the preceding geographical locations. In some embodiments, server farm 206 may be administered as a single entity, while in other embodiments server farm 206 can include multiple server farms.

In some embodiments, server farm 206 may include servers that execute a substantially similar type of operating system platform (e.g., WINDOWS, UNIX, LINUX, iOS, ANDROID, SYMBIAN, etc.) In other embodiments, server farm 206 may include a first group of one or more servers that execute a first type of operating system platform, and a second group of one or more servers that execute a second type of operating system platform.

Server 206 may be configured as any type of server, as needed, e.g., a file server, an application server, a web server, a proxy server, an appliance, a network appliance, a gateway, an application gateway, a gateway server, a virtualization server, a deployment server, a Secure Sockets Layer (SSL) VPN server, a firewall, a web server, an application server, a master application server, a server executing an active directory, or a server executing an application acceleration program that provides firewall functionality, application functionality, or load balancing functionality. Other server types may also be used.

Some embodiments include a first server 206a that receives requests from terminal 240, forwards the request to a second server 206b (not shown), and responds to the request generated by terminal 240 with a response from second server 206b (not shown). First server 206a may acquire an enumeration of applications available to terminal 240 as well as address information associated with an application server 206 hosting an application identified within the enumeration of applications. First server 206a can present a response to the client's request using a web interface and communicate directly with terminal 240 to provide terminal 240 with access to an identified application. One or more terminals 240 and/or one or more servers 206 may transmit data over network 230, e.g., network 101.

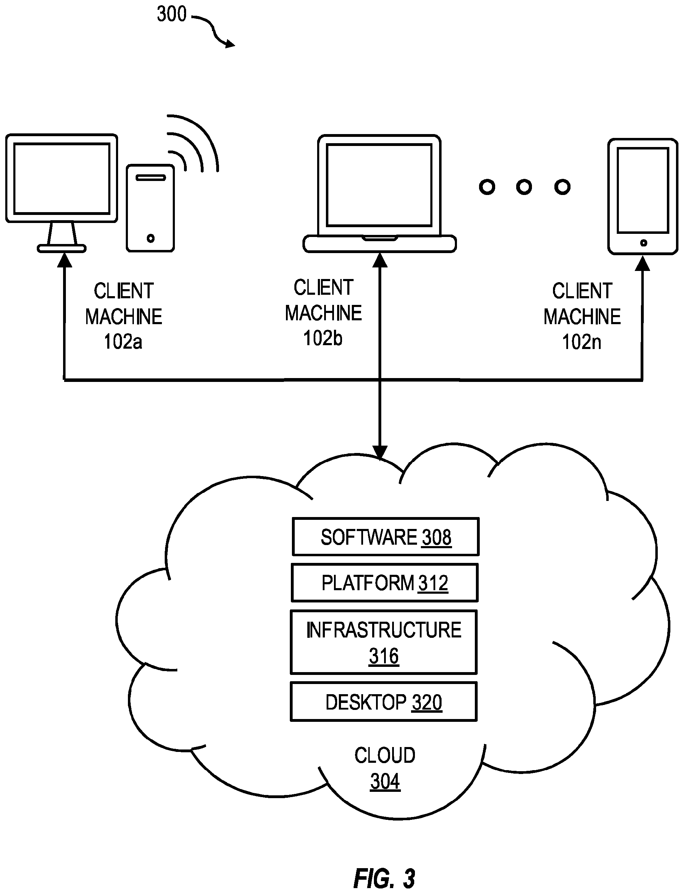

Referring to Fig. 3, a cloud computing environment 300 is depicted, which may also be referred to as a cloud environment, cloud computing or cloud network. Cloud computing environment 300 can provide the delivery of shared computing services and/or resources to multiple users or tenants. For example, the shared resources and services can include, but are not limited to, networks, network bandwidth, servers, processing, memory, storage, applications, virtual machines, databases, software, hardware, analytics, and intelligence.

In cloud computing environment 300, one or more clients 102a-102n (such as those described above) are in communication with a cloud network 304. Cloud network 304 may include back-end platforms, e.g., servers, storage, server farms or data centers. The users or clients 102a-102n can correspond to a single organization/tenant or multiple organizations/tenants. More particularly, in one example implementation cloud computing environment 300 may provide a private cloud serving a single organization (e.g., enterprise cloud). In another example, cloud computing environment 300 may provide a community or public cloud serving multiple organizations/tenants.

In some embodiments, a gateway appliance(s) or service may be utilized to provide access to cloud computing resources and virtual sessions. By way of example, Citrix Gateway, provided by Citrix Systems, Inc., may be deployed on-premises or on public clouds to provide users with secure access and single sign-on to virtual, SaaS and web applications. Furthermore, to protect users from web threats, a gateway such as Citrix Secure Web Gateway may be used. Citrix Secure Web Gateway uses a cloud-based service and a local cache to check for URL reputation and category.

In still further embodiments, cloud computing environment 300 may provide a hybrid cloud that is a combination of a public cloud and a private cloud. Public clouds may include public servers that are maintained by third parties to clients 102a-102n or the enterprise/tenant. The servers may be located off-site in remote geographical locations or otherwise.

Cloud computing environment 300 can provide resource pooling to serve multiple users via clients 102a-102n through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, cloud computing environment 300 can provide on-demand self-service to unilaterally provision computing capabilities (e.g., server time, network storage) across a network for multiple clients 102a-102n. By way of example, provisioning services may be provided through a system such as Citrix Provisioning Services (Citrix PVS). Citrix PVS is a software-streaming technology that delivers patches, updates, and other configuration information to multiple virtual desktop endpoints through a shared desktop image. Cloud computing environment 300 can provide an elasticity to dynamically scale out or scale in response to different demands from one or more clients 102. In some embodiments, cloud computing environment 300 can include or provide monitoring services to monitor, control and/or generate reports corresponding to the provided shared services and resources.

In some embodiments, cloud computing environment 300 may provide cloud-based delivery of different types of cloud computing services, such as Software as a service (SaaS) 308, Platform as a Service (PaaS) 312, Infrastructure as a Service (laaS) 316, and Desktop as a Service (DaaS) 320, for example. laaS may refer to a user renting the use of infrastructure resources that are needed during a specified time period. laaS providers may offer storage, networking, servers or virtualization resources from large pools, allowing the users to quickly scale up by accessing more resources as needed. Examples of laaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California.

PaaS providers may offer functionality provided by laaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California.

SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. Citrix ShareFile from Citrix Systems, DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Similar to SaaS, DaaS (which is also known as hosted desktop services) is a form of virtual desktop infrastructure (VDI) in which virtual desktop sessions are typically delivered as a cloud service along with the apps used on the virtual desktop. Citrix Cloud from Citrix Systems is one example of a DaaS delivery platform. DaaS delivery platforms may be hosted on a public cloud computing infrastructure such as AZURE CLOUD from Microsoft Corporation of Redmond, Washington (herein "Azure"), or AMAZON WEB SERVICES provided by Amazon.com, Inc., of Seattle, Washington (herein "AWS"), for example. In the case of Citrix Cloud, Citrix Workspace app may be used as a single-entry point for bringing apps, files and desktops together (whether on-premises or in the cloud) to deliver a unified experience.

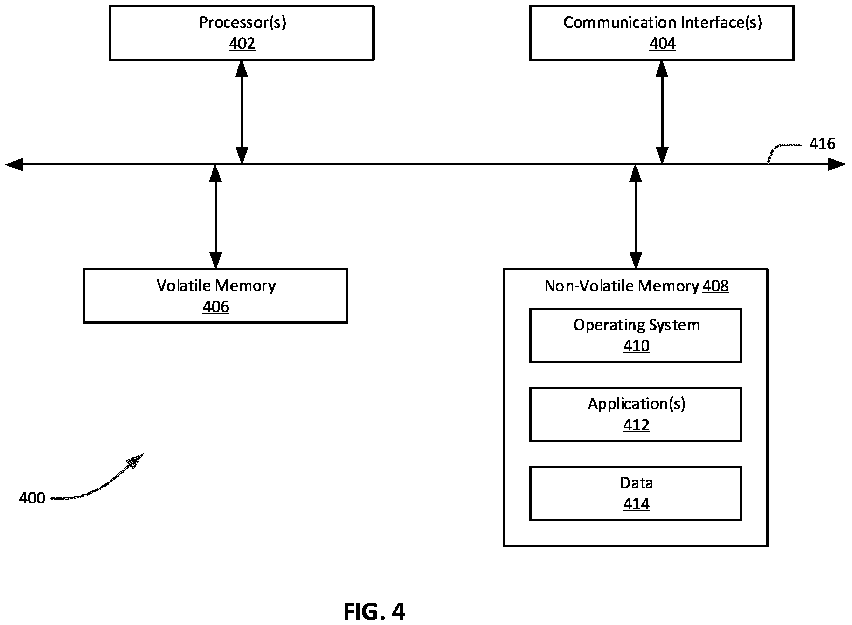

Fig. 4 is a block diagram illustrating selective components of an example computing device 400 in which various aspects of the disclosure may be implemented, in accordance with an embodiment of the present disclosure. Computing device 400 is shown merely as an example of components 105, 107, and 109 of Fig. 1, terminals 240 of Fig. 2, and/or client machines 102a-102n of Fig. 3, for instance. However, the illustrated computing device 400 is shown merely as an example and one skilled in the art will appreciate that components 105, 107, and 109 of Fig. 1, terminals 240 of Fig. 2, and/or client machines 102a-102n of Fig. 3 may be implemented by any computing or processing environment and with any type of machine or set of machines that may have suitable hardware and/or software capable of operating as described herein.

**As** shown in Fig. 4, computing device 400 includes one or more processor(s) 402, one or more communication interface(s) 404, a volatile memory 406 (e.g., random access memory (RAM)), a non-volatile memory 408, and a communications bus 416.

Non-volatile memory 408 may include: one or more hard disk drives (HDDs) or other magnetic or optical storage media; one or more solid state drives (SSDs), such as a flash drive or other solid-state storage media; one or more hybrid magnetic and solid-state drives; and/or one or more virtual storage volumes, such as a cloud storage, or a combination of such physical storage volumes and virtual storage volumes or arrays thereof.

Non-volatile memory 408 stores an operating system 410, one or more applications 412, and data 414 such that, for example, computer instructions of operating system 410 and/or applications 412 are executed by processor(s) 402 out of volatile memory 406. For example, in some embodiments, applications 412 may cause computing device 400 to implement functionality in accordance with the various embodiments and/or examples described herein. In some embodiments, volatile memory 406 may include one or more types of RAM and/or a cache memory that may offer a faster response time than a main memory. Data may be entered using an input device of computing device 400 or received from I/O device(s) communicatively coupled to computing device 400. Various elements of computing device 400 may communicate via communications bus 416.

Processor(s) 402 may be implemented by one or more programmable processors to execute one or more executable instructions, such as applications 412 and/or a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A processor may perform the function, operation, or sequence of operations using digital values and/or using analog signals.

In some embodiments, processor 402 can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory.

Processor 402 may be analog, digital or mixed signal. In some embodiments, processor 402 may be one or more physical processors, or one or more virtual (e.g., remotely located or cloud computing environment) processors. A processor including multiple processor cores and/or multiple processors may provide functionality for parallel, simultaneous execution of instructions or for parallel, simultaneous execution of one instruction on more than one piece of data.

Communication interface(s) 404 may include one or more interfaces to enable computing device 400 to access a computer network such as a Local Area Network (LAN), a Wide Area Network (WAN), a Personal Area Network (PAN), or the Internet through a variety of wired and/or wireless connections, including cellular connections.

In described embodiments, computing device 400 may execute an application on behalf of a user of a client device. For example, computing device 400 may execute one or more virtual machines managed by a hypervisor. Each virtual machine may provide an execution session within which applications execute on behalf of a user or a client device, such as a hosted desktop session. Computing device 400 may also execute a terminal services session to provide a hosted desktop environment. Computing device 400 may provide access to a remote computing environment including one or more applications, one or more desktop applications, and one or more desktop sessions in which one or more applications may execute.

For example, in some embodiments, a first computing device 400 may execute an application on behalf of a user of a client computing device (e.g., client 107 or 109 of Fig. 1), may execute a VM, which provides an execution session within which applications execute on behalf of a user or a client computing device (e.g., any of client machines 102a-102n of Fig. 3), such as a hosted desktop session, may execute a terminal services session to provide a hosted desktop environment, or may provide access to a computing environment including one or more of: one or more applications, one or more desktop applications, and one or more desktop sessions in which one or more applications may execute.

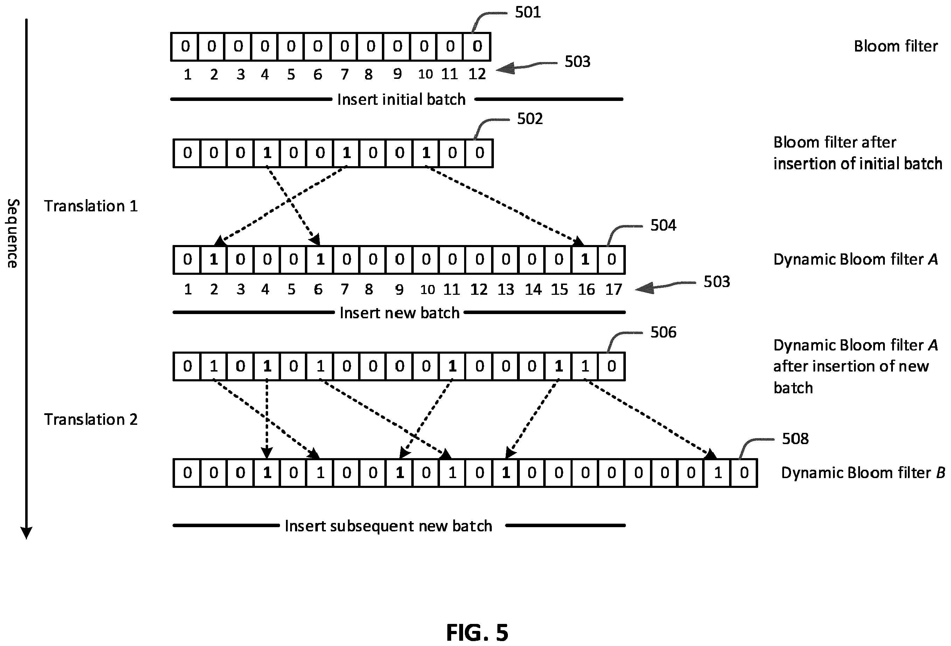

Fig. 5 is a diagram showing insertion of elements into a new dynamic Bloom filter, in accordance with an embodiment of the present disclosure. For example, a first or an initial batch of elements may be received or otherwise provided for encoding into a dynamic Bloom filter. To insert the elements in the initial batch, a Bloom filter 501 is generated. For example, Bloom filter 501 may be generated based on the hash functions that are to be used in hashing the elements, the number of elements in the initial batch, and a target false positive rate. In this example, the data structure is a provided as an array and in particular as a 1 x N array (also sometimes referred to as a bit vector) with N being an integer corresponding to the number of positions or slots in the data structure. Each position in the data structure has an associated index generally denoted 503.

**As** can be seen, once Bloom filter 501 is generated, Bloom filter 501 may be initialized to all '0's. To insert an element from the initial batch, the element can be hashed using the hash functions, and the hashes used to compute the indexes of the data structure of Bloom filter 501 to set to a first value, such as, for example, '1'. Other elements in the initial batch may be inserted into Bloom filter 501 in the same manner. As can be seen in the illustrative example of Fig. 5, insertion of the initial batch of elements into Bloom filter 501 may generate a Bloom filter 502. In particular, the insertion of the initial batch of elements may generate '1' bits at index positions 4, 7, and 10 in the data structure of Bloom filter 502 (as indicated by the bold font in the figure).

In the illustrated embodiment, Bloom filter 502 may be a first or original Bloom filter of a to-be generated sequence of dynamic Bloom filters. In other words, Bloom filter 502 may be the initial Bloom filter from which a subsequent sequence of one or more dynamic Bloom filters originates. Note that the illustrative example in Fig. 5 shows Bloom filters of a very small size for purposes of ease and clarity of explanation, and it will be appreciated that actual Bloom filters may be much larger (e.g., millions or billions of bits).

In the illustrative example of Fig. 5, a new batch of elements may be received or otherwise provided for encoding into existing Bloom filter 502. Before the new batch of elements is added, a dynamic Bloom filter, such as a dynamic Bloom filter *A* 504 may be generated to increase the capacity of Bloom filter 502. In some embodiments, dynamic Bloom filter *A* 504 may be generated based on the hash functions that are to be used in hashing the elements in the new batch, a total number of elements that are to be inserted into dynamic Bloom filter *A* 504, and a target false positive rate. In this example case, the total number of elements to be inserted is the sum of the number of elements already inserted into Bloom filter 502 and the number of elements in the new batch. In some such embodiments, the target false positive rate can be the same false positive rate used with Bloom filter 502.

Once dynamic Bloom filter *A* 504 is generated, the data structure of dynamic Bloom filter *A* 504 may be initialized to all '0's. In order to encode the elements previously inserted into Bloom filter 502 in dynamic Bloom filter *A* 504, a translation operation may be performed to in effect move the "1" bits from Bloom filter 502 to dynamic Bloom filter *A* 504. The following provides an example pseudo code for the translation operation:

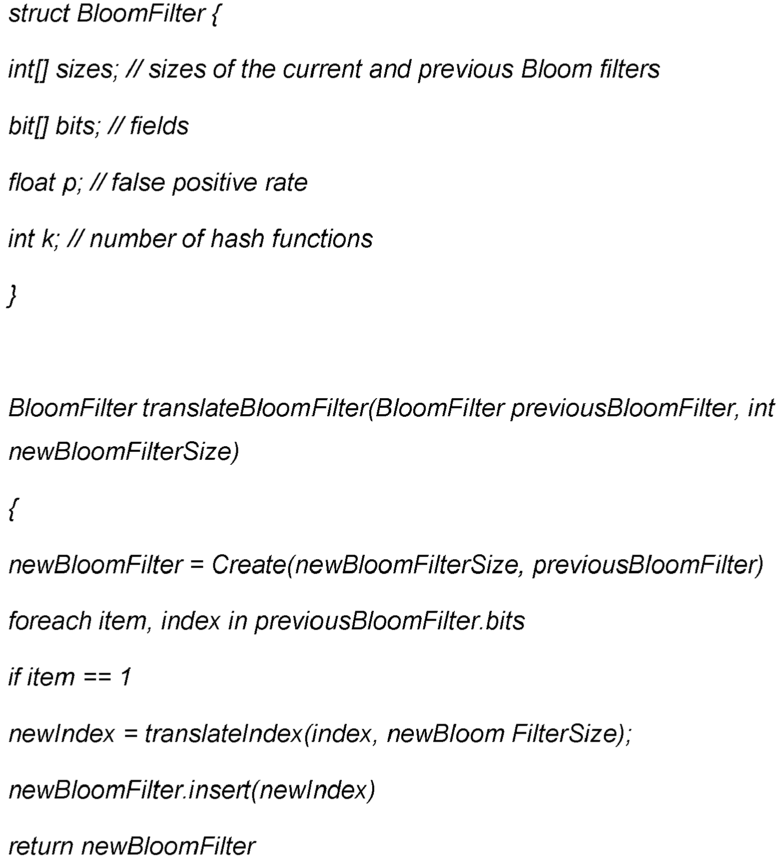

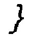

In embodiments, the indexes with a '1' bit in Bloom filter 502 are translated to dynamic Bloom filter *A* 504. For example, index 4 in Bloom filter 502 is translated to index 6 in Bloom filter 504. Similarly, index 7 in Bloom filter 502 is translated to index 2 in Bloom filter 504 and index 10 in Bloom filter 502 is translated to index 16 in Bloom filter 504. In embodiments, the indexes with a '1' bit in Bloom filter 502 are translated to dynamic Bloom filter *A* 504 with a predetermined degree of uniformity. For example, in one implementation, the translation can be performed using the modulo operation *f*(*a*) modulo *b* (*a* mod *b*) where *a* is the index position of the '1' bit in Bloom filter 502, *f* is some function that produces an integer greater than zero with respect to *a,* and *b* is the size of the new dynamic Bloom filter *A* 504. As an example, *f* can be a hash function where a is the value to be hashed, or a random number generator where *a* is the seed. As can be seen in the illustrative example of Fig. 5, Bloom filter 502 may include a '1' bit at index positions 4, 7, and 10 (as indicated by the bold font in the figure). Prior to inserting the new batch of elements, the "1" bit at index 4 in Bloom filter 502 is translated to index position 6 in dynamic Bloom filter *A* 504 (as indicated by the dashed directional line in the figure). The translation may include updating dynamic Bloom filter *A* 504 to change a '0' at index 6 to a '1'. Similarly, the '1' bit at index 7 in Bloom filter 502 is translated to index position 2 in dynamic Bloom filter *A* 504, and the '1' bit at index 10 in Bloom filter 502 is translated to index position 16 in dynamic Bloom filter *A* 504.

Once the '1' bits in Bloom filter 502 are translated to dynamic Bloom filter *A* 504, the elements in the new batch of elements can be inserted into dynamic Bloom filter *A* 504. For example, in an embodiment, to insert an element from the new batch, the element can be hashed using the hash functions, and the hashes used to compute the indexes of the data structure of dynamic Bloom filter *A* 504 to set to '1'. Other elements in the new batch may be inserted into dynamic Bloom filter *A* 504 in the same manner. As can be seen in the illustrative example of Fig. 5, insertion of the new batch of elements into dynamic Bloom filter *A* 504 may generate a dynamic Bloom filter *A* 506. The following provides an example pseudo code (with reference to the *struct BloomFilter* defined above) for the insertion operation:

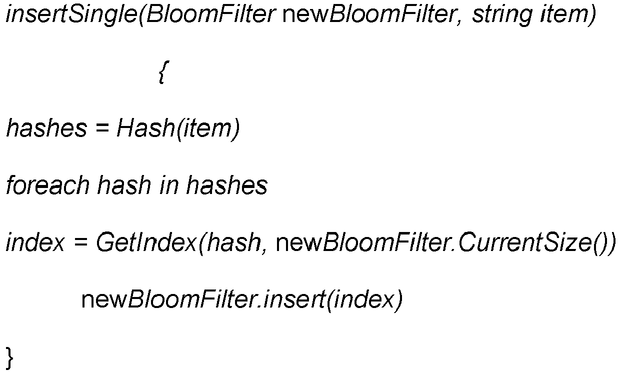

Still referring to the illustrative example of Fig. 5, as can be seen, dynamic Bloom filter *A* 504 may include a '1' bit at index positions 2, 4, 6, 11, 15, and 16. For example, the '1' bits at indexes 2, 6, and 16 may be the result of the translation of the indexes in Bloom filter 502 to dynamic Bloom filter *A* 504, and the '1' bits at indexes 4, 11, and 15 may be the result of the insertion of the elements from the new batch (as indicated by the bold font in the figure) into dynamic Bloom filter *A* 504. Note that a dynamic Bloom filter *A* 506, which includes the new batch of elements, now becomes a current or existing dynamic Bloom filter (i.e., the dynamic Bloom filter to use in querying for the elements from the initial batch and the new batch), and Bloom filter 502 may be discarded (e.g., no longer used).

Subsequently, another new batch of elements may be received or otherwise provided for encoding in existing dynamic Bloom filter *A* 506. Before the new batch of elements is added, a new dynamic Bloom filter *B* 508 may be generated to increase the capacity of dynamic Bloom filter *A* 506. For example, dynamic Bloom filter *B* 508 may be generated in a similar manner as dynamic Bloom filter *A* 504 described above. Note that dynamic Bloom filter *B* 508 is the next dynamic Bloom filter generated in a sequence of dynamic Bloom filters that originates from Bloom filter 502 and includes dynamic Bloom filter *A* 506 and dynamic Bloom filter *B* 508. Once dynamic Bloom filter *B* 508 is generated, the data structure of dynamic Bloom filter *B* 508 may be initialized to all '0's. In order to encode the elements previously inserted into dynamic Bloom filter *A* 506 in dynamic Bloom filter *B* 508, the indexes with a '1' bit in dynamic Bloom filter *A* 506 can be moved to dynamic Bloom filter *B* 508. For example, the indexes in dynamic Bloom filter *A* 506 may be moved to dynamic Bloom filter *B* 508 by translating the indexes in a manner similar to the translation of the indexes in Bloom filter 502 to dynamic Bloom filter *A* 504 described above.

**As** can be seen in the illustrative example of Fig. 5, the '1' bit at index 2 in dynamic Bloom filter *A* 506 is translated to index position 6 in dynamic Bloom filter *B* 508. The translation may include updating dynamic Bloom filter *B* 508 to change a '0' at index 6 to a '1'. Similarly, the '1' bit at index 4 in dynamic Bloom filter *A* 506 is translated to index position 4 in dynamic Bloom filter *B* 508, the '1' bit at index 6 in dynamic Bloom filter *A* 506 is translated to index position 11 in dynamic Bloom filter *B* 508, the '1' bit at index 11 in dynamic Bloom filter *A* 506 is translated to index position 9 in dynamic Bloom filter *B* 508, the '1' bit at index 15 in dynamic Bloom filter *A* 506 is translated to index position 13 in dynamic Bloom filter *B* 508, and the '1' bit at index 16 in dynamic Bloom filter *A* 506 is translated to index position 21 in dynamic Bloom filter *B* 508.

Once the '1' bits in dynamic Bloom filter *A* 506 are translated to dynamic Bloom filter *B* 508, the elements in the subsequent new batch can be inserted into dynamic Bloom filter *B* 508. For example, the subsequent new batch of elements may be inserted into dynamic Bloom filter *B* 508 in a manner substantially similar to the insertion of the new batch of elements into dynamic Bloom Filter *A* 504 described above. Dynamic Bloom filter *B* 508 can then replace dynamic Bloom filter *A* 506 as the existing dynamic Bloom filter, and dynamic Bloom filter *A* 506 may be discarded (e.g., no longer used).

**The** generation of a new dynamic Bloom filter and translation operations described above may be repeated to insert new batches of elements into the existing dynamic Bloom filter. For example, a new dynamic Bloom filter may be generated prior to inserting new batch of elements into the existing dynamic Bloom filter. Prior to inserting the new elements into the new dynamic Bloom filter, the elements previously inserted into the existing dynamic Bloom filter can be moved to the new dynamic Bloom filter by translating indexes with '1' bits in the existing dynamic Bloom filter to index positions in the new dynamic Bloom filter. The new batch of elements can then be inserted into the new dynamic Bloom filter. In this way, dynamic Bloom filters provide the efficient space utilization of Bloom filters even though these dynamic Bloom filters were generated without knowledge of the total number of batches and/or the total number of elements that are to be inserted in the future. The dynamic Bloom filters also provide more efficient computing than Bloom filters by translating elements previously inserted into the current Bloom filter to the new dynamic Bloom filter. In contrast, Bloom filters perform relatively more computationally expensive hashing operations to hash elements in one Bloom filter to a new Bloom filter.

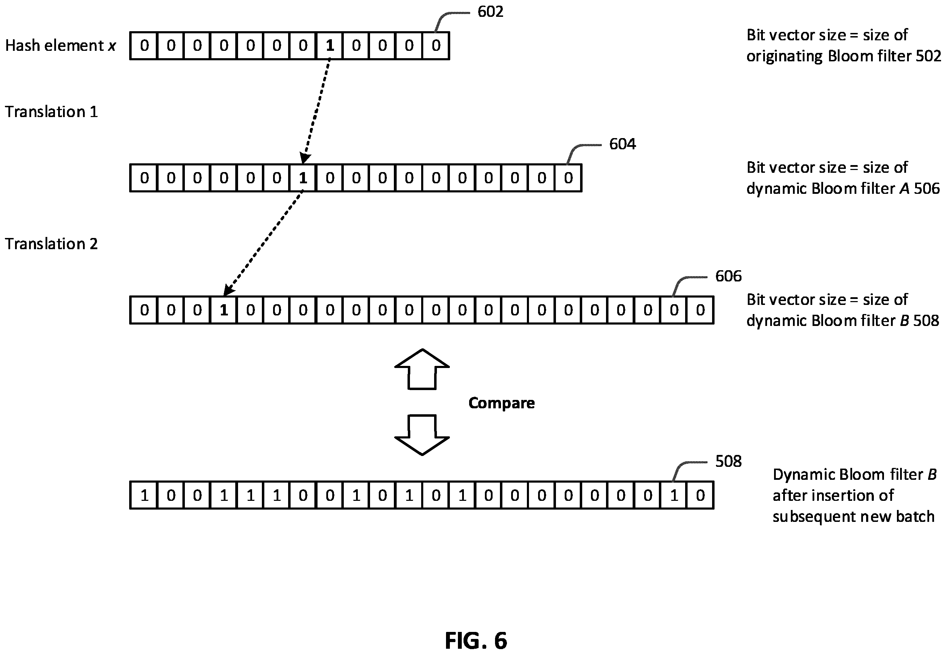

Fig. 6 is a diagram showing an example query of an existing dynamic Bloom filter for an element, in accordance with an embodiment of the present disclosure. For example, in the illustrative example of Fig. 6, dynamic Bloom filter *B* 508 of Fig. 5 may be being queried for an element x (i.e., check to determine whether element x is a member of a set encoded by dynamic Bloom filter *B* 508). In brief, in an embodiment, to query a dynamic Bloom filter for an element, the element is hashed using the hash functions, and the hashes used to determine one or more bits corresponding to one or more indexes to set to a first value, such as, for example, '1' (e.g., the original indexes whose bits are to be set to '1') using the size of an initial Bloom filter. The initial Bloom filter is the Bloom filter that originated the sequence of dynamic Bloom filters of which the existing dynamic Bloom filter that is being queried may be the last dynamic Bloom filter in the sequence. The indexes with a bit having the first value are then translated using the size of every subsequently generated dynamic Bloom filter in the sequence of dynamic Bloom filters up to the existing dynamic Bloom filter. The final indexes from the translations are then used to query the existing dynamic Bloom filter for the element. For example, suppose that the existing dynamic Bloom filter is the *n*^{th} dynamic Bloom filter in the sequence of dynamic Bloom filters originating from the initial Bloom filter. In this example case, the element's hashes and subsequent indexes can be computed using the size of the initial Bloom filter. Then, the indexes with a bit having the first value can be translated *n* times using the size of every subsequent dynamic Bloom filter generated thereafter, and the final indexes can be used to query the existing dynamic Bloom filter for the element.

In some embodiments, if the element does not exist in the existing dynamic Bloom filter (e.g., at least one index in the data structure of the existing dynamic Bloom filter has a bit that has a value other than the first value, such as, for example, zero), the hashes can be used to determine one or more bits corresponding to one or more indexes to set to the first value (e.g., original indexes whose bits are to be set to '1') using the size of the next dynamic Bloom filter in the sequence. These indexes with a bit having the first value are then translated using the size of every subsequently generated dynamic Bloom filter in the sequence up to the existing dynamic Bloom filter, and the final indexes from the translations are then used to query the existing dynamic Bloom filter for the element. Continuing the above example of the sequence of *n* dynamic Bloom filters, the element's hashes and subsequent indexes can be computed using the size of the 1^{st} dynamic Bloom filter (i.e., the dynamic Bloom filter generated subsequent to the initial Bloom filter) in the sequence. Then, the indexes with a bit having the first value can be translated (*n* - *1*) times using the size of every subsequent dynamic Bloom filter generated thereafter, and the final indexes can be used to query the existing dynamic Bloom filter for the element. This sequence of operations (i.e., determining the original indexes and translating the indexes) may be repeat until membership of the element is discovered or the dynamic Bloom filters in the sequence of dynamic Bloom filters to use to determine the original indexes are exhausted. Continuing the above example, if it is determined that the element does not exist in the existing dynamic Bloom filter, the element's hashes and subsequent indexes can be computed using the size of the 2^{nd} dynamic Bloom filter (i.e., the dynamic Bloom filter generated subsequent to the 1^{st} dynamic Bloom filter) in the sequence. Then, the indexes with a bit having the first value can be translated (*n* - *2*) times using the size of every subsequent dynamic Bloom filter generated thereafter, and the final indexes can be used to query the existing dynamic Bloom filter for the element.

For example, as can be seen in the illustrative example of Fig. 6, element *x* can be hashed and one or more bits corresponding to one or more indexes to set to a first value (e.g., '1') determined with respect to a bit vector 602 the size of Bloom filter 502 from which the sequence of dynamic Bloom filters that includes dynamic Bloom filter *B* 508 originated. As can be seen in the illustrative example of Fig. 6, determining the indexes for element *x* in such manner may generate a '1' bit at index position 8 in bit vector 602 (as indicated by the bold font in the figure). Once element *x* is hashed and the indexes whose bits are to be set to '1' are determined with respect to the state of Bloom filter 502 (i.e., the size of the Bloom filter 502), the indexes with a '1' bit can be translated to a subsequent bit vector of a size of a subsequent dynamic Bloom filter sequentially for every subsequent dynamic Bloom filter generated in the sequence of dynamic Bloom filters. As can be seen in Fig. 6, since dynamic Bloom filter *A* 506 was the first previously generated dynamic Bloom filter in the sequence of dynamic Bloom filters, the '1' bit at index 8 in bit vector 602 is translated to index position 7 in a subsequent bit vector 604 the size of dynamic Bloom filter *A* 506. Since there was a subsequently generated dynamic Bloom filter *B* 508 in the sequence of dynamic Bloom filters after dynamic Bloom filter *A* 506, the '1' bit at index 7 in bit vector 604 is translated to index position 4 in a subsequent bit vector 606 the size of dynamic Bloom filter *B* 508. Since dynamic Bloom filter *B* 508 is the last dynamic Bloom filter in the sequence (i.e., there are no subsequently generated dynamic Bloom filters the sequence of dynamic Bloom filters after dynamic Bloom filter *B* 508), the translation operations are complete, and bit vector 606 includes the final indexes (the indexes with a bit having a '1') to use to query dynamic Bloom filter *B* 508 for element *x.* In the illustrated example, since there is a '1' bit at index position 4 in dynamic Bloom filter *B* 508, element *x* may be a member of the set encoded by dynamic Bloom filter *B* 508.

In some embodiments, in the case where the indexes originating and translated from bit vector 602 does not reveal that *x* is a member of the set encoded by dynamic Bloom filter *B* 508, the next subsequent bit vector 604 may be used for determining the one or more bits corresponding to one or more indexes to set to a first value (e.g., '1'), which after *(n* - *1*) translations (in this example case, after one translation since *n* = 2), may be used to query dynamic Bloom filter *B* 508 for element *x.*

The following provides an example pseudo code (with reference to the *struct BloomFilter* defined above) for the query operation:

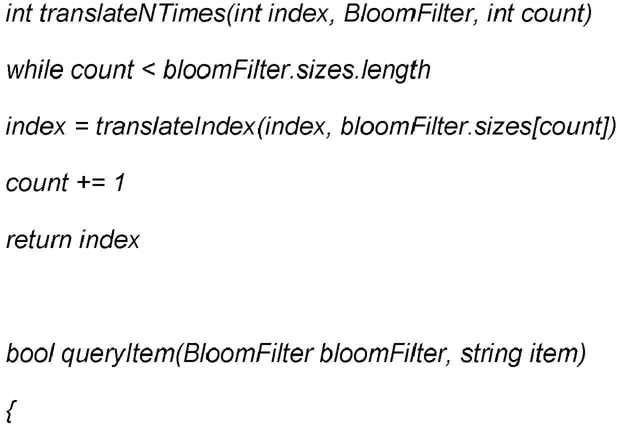

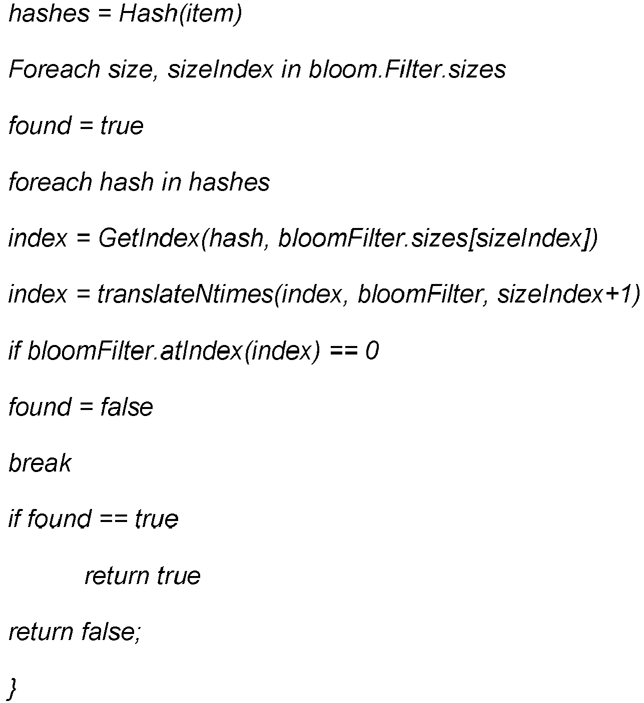

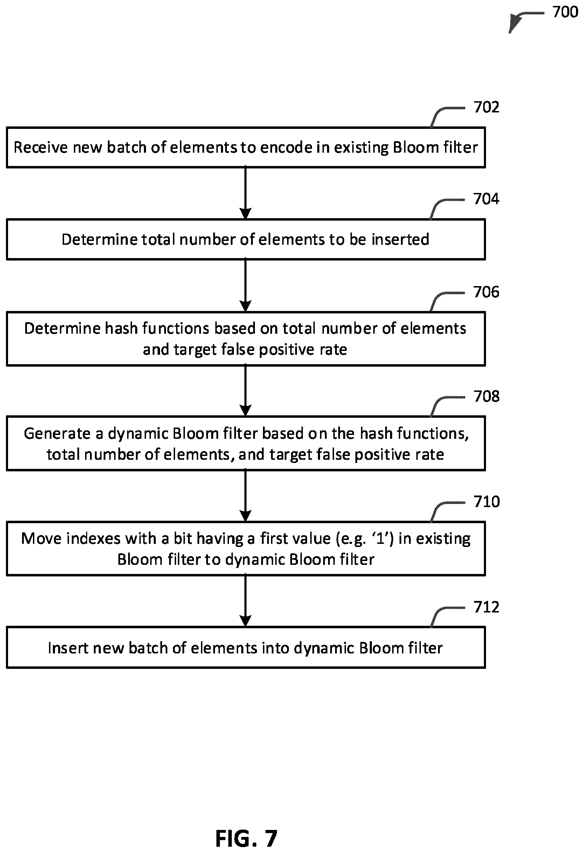

Fig. 7 is a flow diagram illustrating an example process 700 for inserting a batch of elements into a new dynamic Bloom filter, in accordance with an embodiment of the present disclosure. The operations, functions, or actions illustrated in example process 700, and example process 800 further described below, may be stored as computer-executable instructions in a computer-readable medium, such as volatile memory 406 and/or non-volatile memory 408 of computing device 400 of Fig. 4 (e.g., computer-readable medium of components 105, 107, and 109 of Fig. 1, terminals 240 of Fig. 2, and/or client machines 102a-102n of Fig. 3). For example, in some embodiments, the operations, functions, or actions described in the respective blocks of example process 700, and example process 800 further described below, may be implemented by applications 412 and/or data 414 of computing device 400.

With reference to example process 700 of Fig. 7, at operation 702, a new batch of elements may be received for insertion into an existing Bloom filter. For example, the existing Bloom filter may be a Bloom filter or a dynamic Bloom filter in a sequence of dynamic Bloom filters originating from the Bloom filter. At operation 704, the total number of elements to be inserted can be determined. For example, the total number of elements to be inserted is the number of elements encoded in the existing Bloom filter and the number of elements in the new batch of elements. Note that the determined total number is a total that does not include or otherwise account for batches of elements that may be received subsequent to the presently received new batch of elements.

At operation 706, the number of hash functions to use with a to-be generated dynamic Bloom filter can be determined. The number of hash functions may be based on the total number of elements and a target or desired false positive rate. At operation 708, a dynamic Bloom filter can be generated based on the determined number of hash functions, the total number of elements to be inserted into the generated dynamic Bloom filter, and the target false positive rate.

At operation 710, the indexes with a '1' bit (e.g., indexes with a bit having a first value such as '1') in the existing Bloom filter can be moved to the data structure of the generated dynamic Bloom filter. At operation 712, the new batch of elements can be inserted into the dynamic Bloom filter. For example, in an implementation, the second elements may be hashed using the hash functions to generate hashed values for the second elements, and one or more bits of the data structure of the dynamic Bloom filter may be set to the first value based upon the hashed values.

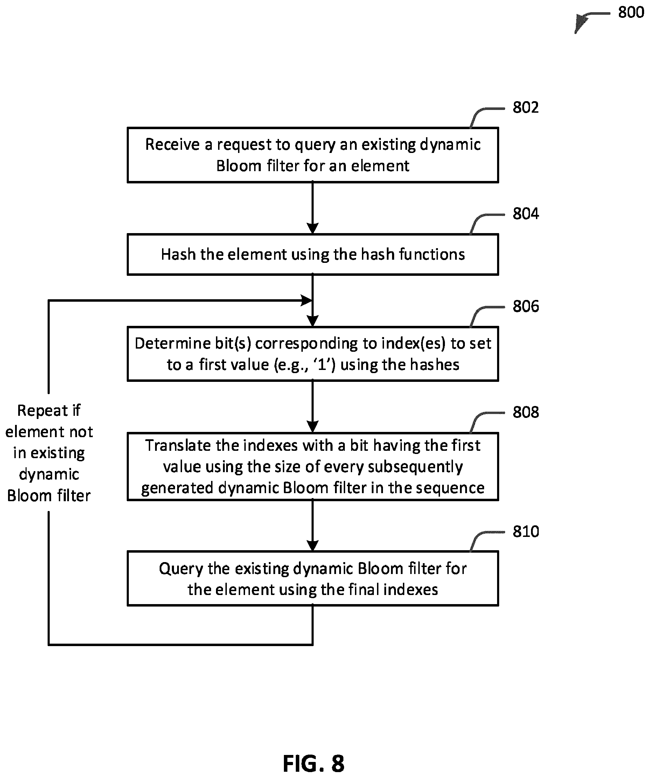

Fig. 8 is a flow diagram illustrating an example process 800 for querying an existing dynamic Bloom filter for an element, in accordance with an embodiment of the present disclosure. At operation 802, a request to query an existing dynamic Bloom filter for an element may be received.

At operation 804, the element can be hashed using the hash functions to generate at least one hash value for the element. For example, the hash functions may be the hash functions for use with the existing dynamic Bloom filter. At operation 806, the hashes can be used to determine the bit(s) corresponding to the index(es) to set to a first value, such as, for example, '1'. For example, these original indexes can be computed using the size of an initial Bloom filter that originated the sequence of dynamic Bloom filters which includes the existing dynamic Bloom filter.

At operation 808, the original indexes (i.e., the indexes with a bit having the first value) can be translated using the size of every subsequently generated dynamic Bloom filter in the sequence of dynamic Bloom filters up to the existing dynamic Bloom filter.

At operation 810, the existing dynamic Bloom filter can be queried for the element using the final indexes from the translations. In an embodiment, operations 806-810 may be repeated until membership of the element in the existing dynamic Bloom filter is discovered or the dynamic Bloom filters in the sequence of dynamic Bloom filters to use to compute the original indexes are exhausted.

In one aspect, a method may include generating a first bit vector for a Bloom filter, the first bit vector may have a first size and each bit of the first bit vector may be initially set to an initial value, receiving one or more first elements to be added to a set, and setting, to a first value which is different than the initial value, bits of the first bit vector corresponding to the one or more indexes based on hashing the one or more first elements using the first size. The method may also include receiving one or more second elements to be added to the set and determining a second size for the Bloom filter based at least on the number of second elements to be added to the set and a target false positive rate. The method may further include, in response to determining the second size is greater than the first size, generating a second bit vector having the second size, wherein each bit of the second bit vector may be initially set to the initial value, translating bits of the first bit vector set to the first value to bits of the second bit vector, and setting, to the first value, bits of the second bit vector based on hashing the one or more second elements using the second size.

In one aspect, determining the second size for the Bloom filter may be further based on a number of elements in the set prior to receiving the one or more second elements to be added to the set.

In one aspect, the false positive rate may be a second false positive rate, and the method may also include determining the first size for the Bloom filter based at least on the number of first elements to be added to the set and a first target false positive rate.

In one aspect, the first false positive rate may be equal to the second false positive rate.

In one aspect, the translating may include using a modulo operation.

In one aspect, setting, to the first value, the bits of the first bit vector corresponding to the one or more indexes may include, for each of the first elements, hashing the element using one or more first hash functions and the first size to generate the one or more indexes of the first bit vector, and setting, to the first value, the bits of the first bit vector corresponding to the one or more generated indexes.

In one aspect, setting, to the first value, the bits of the second bit vector corresponding to the translated indexes may include, for each of the second elements, hashing the element using one or more second hash functions, and computing the one or more indexes of the second bit vector based on the hashing of the element using one or more second hash functions.

In one aspect, the one or more first hash functions and the one or more second hash functions may be the same hash functions.

In one aspect, the Bloom filter may include a sequence of bit vectors, wherein the first bit vector immediately precedes the second bit vector in the sequence of bit vectors.

In one aspect, the method may also include, responsive to a request to query the Bloom filter for an element, determining one or more first indexes of the first bit vector based on hashing the element using the first size, determining, from the one or more first indexes, one or more second indexes in the first bit vector set to the first value, translating the one or more second indexes using the size of every bit vector subsequent to the first bit vector in the sequence of bit vectors, and querying the Bloom filter for the element using final indexes from the translations.

As will be further appreciated in light of this disclosure, with respect to the processes and methods disclosed herein, the functions performed in the processes and methods may be implemented in differing order. Additionally or alternatively, two or more operations may be performed at the same time or otherwise in an overlapping contemporaneous fashion. Furthermore, the outlined actions and operations are only provided as examples, and some of the actions and operations may be optional, combined into fewer actions and operations, or expanded into additional actions and operations without detracting from the essence of the disclosed embodiments.

In the description of the various embodiments, reference is made to the accompanying drawings identified above and which form a part hereof, and in which is shown by way of illustration various embodiments in which aspects of the concepts described herein may be practiced. It is to be understood that other embodiments may be utilized, and structural and functional modifications may be made without departing from the scope of the concepts described herein. It should thus be understood that various aspects of the concepts described herein may be implemented in embodiments other than those specifically described herein. It should also be appreciated that the concepts described herein are capable of being practiced or being carried out in ways which are different than those specifically described herein.

As used in the present disclosure, the terms "engine" or "module" or "component" may refer to specific hardware implementations configured to perform the actions of the engine or module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations, firmware implements, or any combination thereof are also possible and contemplated. In this description, a "computing entity" may be any computing system as previously described in the present disclosure, or any module or combination of modulates executing on a computing system.

Terms used in the present disclosure and in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, such recitation should be interpreted to mean at least the recited number (e.g., the bare recitation of "two widgets," without other modifiers, means at least two widgets, or two or more widgets). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

It is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof. The use of the terms "connected," "coupled," and similar terms, is meant to include both direct and indirect, connecting, and coupling.

All examples and conditional language recited in the present disclosure are intended for pedagogical examples to aid the reader in understanding the present disclosure, and are to be construed as being without limitation to such specifically recited examples and conditions. Although example embodiments of the present disclosure have been described in detail, various changes, substitutions, and alterations could be made hereto without departing from the spirit and scope of the present disclosure. Accordingly, it is intended that the scope of the present disclosure be limited not by this detailed description, but rather by the claims appended hereto.

## Claims

1. A method (700) for generating a dynamic Bloom filter, the method comprising:
determining (704) a total number of elements to insert within a data structure of a dynamic Bloom filter, the data structure having a plurality of bit positions with each bit position being identified by an associated index, the total number of elements corresponding to a number of first elements encoded in a data structure of an existing Bloom filter and a number of second elements to be added to the existing Bloom filter;
generating (708) the data structure of the dynamic Bloom filter based on the total number of elements, a target false positive rate, and at least one hash function to use in hashing the second elements;
translating indexes with a bit having a first value in the data structure of the existing Bloom filter to the data structure of the dynamic Bloom filter; and
inserting (712) the second elements into the data structure of the dynamic Bloom filter by hashing the second elements using the at least one hash function to generate hashed values for the second elements and setting one or more bits of the data structure of the dynamic Bloom filter to the first value based upon the hashed values.

2. The method of claim 1, wherein the existing Bloom filter is an existing dynamic Bloom filter, the existing dynamic Bloom filter and the generated dynamic Bloom filter are in a sequence of dynamic Bloom filters.

3. The method of claim 2, wherein the existing dynamic Bloom filter immediately precedes the generated dynamic Bloom filter in the sequence.

4. The method of any of claims 1 through 3, wherein the dynamic Bloom filter increases a capacity of the existing Bloom filter immediately preceding the dynamic Bloom filter.

5. The method of any of claims 1 through 4, wherein the total number of elements is a sum of the number of first elements and the number of second elements.

6. The method of any of claims 1 through 5, wherein the existing Bloom filter is an initial Bloom filter in a sequence of dynamic Bloom filters that includes the generated dynamic Bloom filter.

7. The method of any of claims 1 through 6, wherein the translating includes a modulo operation.

8. The method of any of claims 1 through 7, wherein the target false positive rate is the same as a target false positive rate of the existing Bloom filter.

9. The method of any of claims 1 through 8, wherein the dynamic Bloom filter is an existing dynamic Bloom filter, the method further comprising:
responsive to a request (802) to query the existing dynamic Bloom filter for an element, hashing (804) the element using the at least one hash function to generate at least one hash value for the element;
determining (806) one or more bits corresponding to one or more indexes to set to the first value based on the at least one hash value for the element and a size of an initial Bloom filter, the initial Bloom filter being a Bloom filter that originated a sequence of dynamic Bloom filters which include the existing dynamic Bloom filter;
translating (808) indexes with a bit having the first value using the size of every sequentially generated dynamic Bloom filter up to the existing dynamic Bloom filter; and
querying (810) the existing dynamic Bloom filter for the element using the final indexes from the translations.

10. The method of claim 9, wherein the translating indexes with a bit having the first value using the size of every sequentially generated dynamic Bloom filter includes a modulo operation.

11. The method of any of claims 9 and 10, further comprising:
responsive to a determination that the element does not exist in the existing dynamic Bloom filter,
determining one or more bits corresponding to one or more indexes to set to the first value based on the at least one hash value for the element and a size of a first dynamic Bloom filter in the sequence, the first dynamic Bloom filter succeeding the initial Bloom filter;
translating indexes with a bit having the first value using the size of every sequentially generated dynamic Bloom filter up to the existing dynamic Bloom filter; and
querying the existing dynamic Bloom filter for the element using the final indexes from the translations.

12. The method of any of claims 1 through 11, wherein the data structure of the dynamic Bloom filter includes a bit vector.

13. The method of any of claims 1 through 12, wherein the existing Bloom filter is a conventional Bloom filter.

14. The method of any of claims 1 through 13, further comprising, prior to translating indexes with a bit having a first value in the data structure of the existing Bloom filter to the data structure of the dynamic Bloom filter and inserting the second elements into the data structure of the dynamic Bloom filter, initializing the data structure of the dynamic Bloom filter to 0's.

15. A system comprising:
a memory; and
one or more processors in communication with the memory and configured to perform a method according to any one of claims 1 through 14.
